(19) Europäisches Patentamt / European Patent Office / Office européen des brevets

(11) **EP 2 405 027 A2**

## (12) EUROPEAN PATENT APPLICATION
published in accordance with Art. 153(4) EPC

(43) Date of publication:
**11.01.2012 Bulletin 2012/02**

(21) Application number: **10748990.8**

(22) Date of filing: **08.03.2010**

(51) Int Cl.:
**C22C 38/40** (2006.01)    **C21D 8/00** (2006.01)
**C22C 38/08** (2006.01)

(86) International application number:
**PCT/KR2010/001436**

(87) International publication number:
**WO 2010/101448 (10.09.2010 Gazette 2010/36)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.03.2009 KR 20090019174**

(71) Applicants:
• **KIST Korea Institute of Science and Technology Seongbuk-gu
  Seoul 136-791 (KR)**
• **Posco Specialty Steel Co., Ltd
  Changwon, Gyeongsangnam-do 641-370 (KR)**

(72) Inventors:
• **LEE, Seung-Cheol
  Seongnam
  Gyeonggi-do 463-738 (KR)**
• **PARK, Dae-Bum
  Seoul 139-054 (KR)**

• **JUNG, Woo-Sang
  Seoul 143-302 (KR)**
• **KIM, Dong-Ik
  Seoul 120-190 (KR)**
• **LEE, Young-Su
  Seoul 136-130 (KR)**
• **KIM, Deog-Ryung
  Gyeongsangnam-do 641-826 (KR)**
• **LEE, Dong-Hee
  Gyeongsangnam-do 641-200 (KR)**
• **SHIM, Jae-Hyeok
  Seoul 143-751 (KR)**

(74) Representative: **Hannke, Christian
  Hannke Bittner & Partner
  Patent- und Rechtsanwälte
  Ägidienplatz 7
  93047 Regensburg (DE)**

(54) **STAINLESS STEEL MATERIAL HAVING OUTSTANDING HIGH-TEMPERATURE STRENGTH, AND A PRODUCTION METHOD THEREFOR**

(57)    Provided are a stainless steel having excellent high-temperature strength and a method of manufacturing the same, and more particularly, an austenitic stainless steel having excellent high-temperature and creep strength as well as excellent corrosion resistance able to be used in high-temperature corrosive environments such as power plants and a method of manufacturing the same. The stainless steel of the present invention may have a precipitation index of 1.5 to 2.5.

FIG. 1

**Description**

**BACKGROUND OF THE INVENTION**

**Field of the Invention**

The present invention relates to a stainless steel having excellent high-temperature strength and a method of manufacturing the same, and more particularly, to an austenitic stainless steel having excellent high-temperature and creep strength as well as excellent corrosion resistance able to be used in high-temperature corrosive environments such as power plants and a method of manufacturing the same.

**Description of the Related Art**

A power plant having a high-temperature operating environment, such as a thermal power plant or a nuclear power plant, may have various limitations, in that high-temperature steam may corrode plant facilities or the like. Also, ultra super critical boilers with increased steam temperature and pressure have recently been installed globally in order to improve the efficiency of facilities, and high-temperature strength properties are required, because the pressures acting on pipes under the foregoing ultra high critical pressure are very high in comparison to the case of a typical boiler.

Therefore, austenitic stainless steels having excellent corrosion resistance at high temperatures have been widely used in such plant facilities. Austenitic stainless steel has excellent high-temperature strength and high-temperature corrosion resistance in comparison to ferritic steel, and thus, austenitic stainless steel largely replaces ferritic steel in temperature regions of about 650°C or more.

However, even in the case of austenitic stainless steel, steam oxidation scales are formed at contact areas between the steel and steam at high temperatures and a phenomenon may be generated in which the formed scales are delaminated. Various methods have conventionally been suggested to resolve the foregoing phenomenon. The methods are widely classified as a method of increasing the contents of corrosion resistant elements such as Cr and Ni in the entirety or a portion of the steel, a method of improving a surface concentration of Cr by the refinement of grains in the entirety or a portion of the steel, etc. Most of the foregoing methods may be regarded as methods of improving corrosion resistance by controlling the Cr content to be higher at a surface portion.

However, manufacturing costs may be increased because large amounts of alloying elements may be required to be added or special surface treatments may have to be performed in order to increase the content of elements such as Cr and Ni. Also, the method of refining grains may have a limitation in that grains may become coarse again by a high-temperature treatment such as high-temperature processing and heat treatment, and thus, the limitations of a material for high-temperature use may be considered as not having been completely resolved. In particular, when grain refinement is promoted by precipitates, the precipitates generally may not perform pinning action preventing grain growth because the precipitates are redissolved at high temperatures or become coarse by the so-called 'Ostwald ripening' in which fine precipitates are dissolved and diffused to be absorbed by large precipitates.

Further, a stainless steel pipe or the like used in high temperature and high pressure environment, such as a power plant boiler as described above, should have great resistance with respect to a creep phenomenon according to the continuous action of stress, as well as high strength, as the stainless steel pipe is required to to endure high pressure at high temperatures; however, a clear solution with respect to the foregoing limitations has not been suggested to date.

**SUMMARY OF THE INVENTION**

An aspect of the present invention provides a stainless steel having greatly improved high-temperature and creep strength as well as not greatly increasing the amounts of added alloying elements and not recoarsening the refined grains.

According to an aspect of the present invention, there is provided a stainless steel having a precipitation index of 1.5 to 2.5 which is expressed by the following Equation 1:

$$[\text{Equation 1}]$$

$$(C/12+N/14)/(Nb/91+V/51): 1.5 \text{ to } 2.5$$

where, carbon (C), nitrogen (N), niobium (Nb), and vanadium (V) denote contents (wt%) of corresponding components, respectively.

At this time, 0.1 wt% to 1.0 wt% of niobium (Nb) and 0.1 wt% to 1.0 wt% of vanadium (V) may be included.

Also, V may be present at a level of 10% or less of Nb in an atomic ratio in precipitates of steel before being used.

The stainless steel, for example, may have a composition comprising: 0.01 to 0.1 wt% of carbon (C), 0.1 to 1.0 wt% of silicon (Si), 0.1 to 2.0 wt% of manganese (Mn), 16 to 20 wt% of chromium (Cr), 7 to 15 wt% of nickel (Ni), 0.1 to 1.0 wt% of niobium (Nb), 0.1 to 1.0 wt% of vanadium (V), 0.1 to 0.3 wt% of cobalt (Co), 2 to 5 wt% of copper (Cu), 0.03 wt% or less of aluminum (Al), 0.01 to 0.25 wt% of nitrogen (N), residual iron (Fe), and unavoidable impurities.

According to another aspect of the present invention, there is provided a method of manufacturing stainless steel having high-temperature strength including: heating a steel satisfying Nb and V compositions of the foregoing stainless steel and subjected to hot rolling and/or cold rolling to 1200°C or more; and cooling the heated stainless steel at a cooling rate of 10°C/s or more to 500°C or less.

## BRIEF DESCRIPTION OF THE DRAWINGS

The above and other aspects, features and other advantages of the present invention will be more clearly understood from the following detailed description taken in conjunction with the accompanying drawings, in which:

FIG. 1 is a graph comparing distribution frequencies for the sizes of precipitates after the high-temperature creep tests, in which (a) is a frequency distribution graph for the precipitate sizes of Comparative Steel 1, and (b) is a frequency distribution graph for the precipitate sizes of Inventive Steel 2;

FIG. 2 shows volume ratios occupied according to the size distributions of precipitate particles, in which (a) is a volume distribution graph for the particle sizes of Comparative Steel 1, and (b) is a volume distribution graph for the particle sizes of Inventive Steel 2;

FIG. 3 shows the results of investigating precipitates in Comparative Steel 1, in which (a) is an electron micrograph showing each region, (b) is a result of energy-dispersive X-ray spectroscopy (EDX) on the precipitate marked in number 1 in (a), and (c) is a result of EDX on the precipitate marked in number 2 in (a); and

FIG. 4 shows the results of investigating precipitates in Inventive Steel 2, in which (a) is an electron micrograph showing each region, (b) is a result of EDX on the precipitate marked in number 1 in (a), and (c) is a result of EDX on the precipitate marked in number 2 in (a).

## DETAILED DESCRIPTION OF THE PREFERRED EMBODIMENT

Hereinafter, the present invention is described in detail.

From the results of in-depth research on a method of improving high-temperature and creep strength of austenitic stainless steel without the deterioration of corrosion resistance at the same time, the inventors of the present invention discovered that when niobium (Nb)-based precipitates are stably formed in the steel, a creep phenomenon may not only be prevented even in the case in which stress acts at high temperatures, but high-temperature strength may also be improved and the pinning effect of grains may be maintained, and thus, have completed the present invention.

That is, the present invention is characterized by the fact that the precipitation condition of vanadium (V)-based precipitates is controlled in order to stably form Nb precipitates in austenitic stainless steel with Nb and V added.

That is, according to the result of research undertaken by the present inventors, finely distributed Nb-based precipitates are in stable phases in a general material for room-temperature use and are very favorable in order to secure strength, but the finely distributed Nb-based precipitates may be changed into coarse and concentrated Nb precipitates by means of the foregoing Ostwald ripening phenomenon in which the steel is heated to high temperatures and thus, do not exhibit any function of improving strength or creep strength. However, control of the foregoing phenomenon is very important because the coarsening of the Nb precipitates may be prevented as much as possible when the interfaces of the Nb-based precipitates are stabilized by minimizing the surface energy acting on the interfaces between the Nb precipitates and the steel.

For this purpose, the Nb precipitates in the present invention are stabilized by forming V precipitates on the surfaces of the Nb precipitates during a process of performing a heat treatment after hot and cold processing. That is, since a V atom is relatively smaller than an Nb atom, the surfaces of the Nb precipitates may be greatly stabilized when the V atoms precipitate on the surfaces of the Nb precipitates. However, when V precipitates are excessively formed, even in the steel first manufactured, the V precipitates are not formed on the surfaces of the Nb precipitates but there is a concern that separate V precipitates may be formed. In this case, the effect intended in the present invention is difficult to obtain, because the V source, which is for precipitating on the Nb precipitates at high temperatures, may be insufficient.

That is, in the present invention, a large amount of V precipitates are not formed in unused austenitic stainless steel at room temperature, but V acts to stabilize the Nb precipitates by precipitating on the surfaces of the Nb precipitates. According to the result of research undertaken by the present inventors, a precipitation phenomenon of the V precipitates on the Nb precipitates is considered to occur due to the fact that voids are formed between the Nb precipitates and the matrix structures of the stainless steel and the precipitation of the fine V precipitates in portions in which the voids are formed is facilitated even under conditions of low pressure. Also, creep fracture stress is increased by reprecipitation of the residual V dissolved in the matrix under high-temperature stress.

The foregoing phenomenon is not always generated by the addition of Nb and V, and even when the foregoing phenomenon is generated, the V precipitates may not precipitate sufficiently to such a degree that the Nb precipitates may be stabilized without being dissolved at high temperatures. Therefore, an appropriate condition by which the Nb precipitates are stabilized is therefore required.

In order to find the foregoing condition, the present inventors investigated the changes in the composition of austenitic stainless steel and the composition of precipitates when the stress acts at high temperatures. As a result, it may be confirmed that Nb, V, C, and N, major components constituting the precipitates, may satisfy the following Equation 1:

[Equation 1]

$$(C/12+N/14)/(Nb/91+V/51): 1.5 \text{ to } 2.5$$

where C, N, Nb, V denote contents (wt%) of corresponding components, respectively.

That is, since the precipitates of Nb generally have a carbide, nitride, or carbonitride form, which are compounds of carbon or nitrogen, and the precipitates of V may also have a carbide, nitride, or carbonitride form, the V precipitates may be formed on the Nb precipitates while the stress acts at high temperatures when the Equation 1 between these precipitates is properly controlled. In the present invention, $(C/12+N/14)/(Nb/91+V/51)$ expressed in Equation 1 is briefly referred to as a 'precipitation index'.

The precipitation index value may be in a range of 1.5 to 2.5 as described in Mathematical Equation 1. When the value is less than 1.5, precipitates may not be formed because the contents of carbon and nitrogen are insufficient, and when the value is more than 2.5, sufficient precipitates are difficult to be formed with respect to input amounts because the surplus amounts of Nb and V are too large.

That is, the stainless steel having excellent high-temperature strength of the present invention is austenitic stainless steel having a $(C/12+N/14)/(Nb/91+V/51)$ value satisfying a range of 1.5 to 2.5.

In the stainless steel having the foregoing condition, a sufficient precipitation hardening effect may be obtained even at high temperatures because finely distributed Nb precipitates are stabilized. Therefore, high-temperature strength and high-temperature creep strength are very good. In addition, high-temperature corrosion resistance may also be effectively secured according to the fine grains because a grain growth pinning effect by means of the Nb precipitates may also be anticipated. Sufficient corrosion resistance may also be secured when the grains are refined, because the fact that Cr required for securing corrosion resistance diffuses to a surface through crystal interfaces is a general opinion.

Since one of the main features of the present invention is that Nb precipitates are initially formed, and then V precipitates precipitate on the Nb precipitates as described above, it is first necessary to set a condition of forming sufficient Nb precipitates. In order to form sufficient Nb precipitates, a content of Nb may be additionally limited in addition to the foregoing condition. According to the result of research undertaken by the inventors of the present invention, Nb may be added to the steel in an amount of 0.1 wt% or more. When the content of Nb is excessively high, the precipitates become too coarse and may adversely affect the physical properties of the steel. Thus, an upper limit of the Nb content is determined as being 1.0 wt%. Therefore, the content of Nb included in the stainless steel of the present invention may be in a range of 0.1 wt% to 1.0 wt%.

Also, the stainless steel having excellent high-temperature strength has additional features, in which the V precipitates are formed around the Nb precipitates during a solution heat treatment after hot and cold processing to form stable Nb precipitates, and creep strength is improved by forming precipitates from the residual V dissolved in the matrix after being subjected to a high-temperature creep test under a high-temperature creep condition of continuously applying stress of 200 MPa for 1200 hours. That is, the content of V in an atomic fraction has a ratio of 10% or less of Nb during energy-dispersive X-ray spectroscopy (EDX) compositional analysis of the Nb precipitates before the high-temperature creep test. However, for example, additional V may precipitate in order that the content of V in an atomic fraction included in the foregoing precipitates becomes 15% or more of Nb after the high-temperature creep test in which tensile stress of 200 MPa is applied for 1200 hours or more.

Any stainless steel may be included in the scope of the present invention, so long as the stainless steel has the foregoing compositional features. That is, the present invention has the most important feature in which the Nb precipitates are stabilized during high-temperature creep by using the range of the foregoing relation and thus, any stainless steel may be included in the scope of the present invention if the stainless steel is austenitic stainless steel using the foregoing feature.

Since the basic strength is determined by a component system of stainless steel, the foregoing condition may give more effect when the basic strength condition is satisfied. The desirable composition of the stainless steel of the present invention discovered through a great deal of research by the inventors of the present invention is **characterized in that** C, Si, Mn, Cr, Ni, Mo, W, Cu, Al, Co, Nb, V, or N are added in the following content ranges. Hereinafter, the component system of the stainless steel is briefly described.

Carbon (C): 0.01 wt% to 0.1 wt%

Since C is a very useful element for securing high-temperature tensile strength and high-temperature creep strength required in austenitic stainless steel for high-temperature use, C may be added in an amount of 0.01 wt% or more. However, C combines with Cr to form a carbide such as $Cr_{23}C_6$ when a content of C is too high, and in this case, a Cr-deficient layer having insufficient Cr is formed around the carbides so that it is unfavorable to secure corrosion resistance and weldability may also decrease. Therefore, an upper limit of the C content is determined as 0.1 wt%.

Silicon (Si): 0.1 wt% to 1.0 wt%

Silicon is useful for preventing oxidation of the steel by steam, as well as an element for deoxidation, and may be added in an amount of about 0.1 wt% or more. However, since the processability of steel deteriorates when a Si content is too high, the Si content may be controlled to 1.0 wt% or less.

Manganese (Mn): 0.1 wt% to 2.0 wt%

Mn combines with an impurity, S, included in the steel, to form MnS and improves hot processability of the steel, but the processability markedly deteriorates and weldability also decreases when Mn is added excessively. Therefore, the Mn content may be in a range of 0.1 wt% to 2 wt%.

Chromium (Cr): 16 wt% to 20 wt%

Cr is an element that improves corrosion resistance, especially high-temperature corrosion resistance, of the steel, and may be added in an amount of 16 wt% or more. However, an austenitic structure becomes unstable when a Cr content is too high, and a large amount of Ni must to be added to compensate for this, so that manufacturing costs of the steel will be increased. Therefore, Cr may be added in an amount of 20 wt% or less.

Nickel (Ni): 7 wt% to 15 wt%

Ni is an element stabilizing an austenitic structure and is also an important element for securing corrosion resistance. Also, Ni needs to be added in an amount of 7 wt% or more, in order to obtain the austenitic structure by compensating for the effect of Cr on the austenitic structure. However, the Ni content may be limited to 15 wt% or less, because any further increase in the effect of the Ni addition is difficult to be anticipated and the manufacturing costs of the steel are also unnecessarily increased when Ni is added excessively.

Niobium (Nb): 0.1 wt% to 1.0 wt%

Nb is an element that acts to improve high-temperature strength and high-temperature creep strength by precipitating in the steel as described above, and thus, needs to be added in an amount of 0.1 wt% or more. However, since there is a concern that precipitates become coarse when the Nb content is too high, Nb may be added in an amount of 1.0 wt% or less.

Vanadium (V): 0.1 wt% to 1.0 wt%

V is another important element in the present invention which stabilizes Nb precipitates by forming precipitates on the Nb precipitates when the steel is under stress during hot rolling. Therefore, V may be added in an amount of 0.1 wt% or more in order to obtain the foregoing effect. However, V may be added in an amount of 1.0 wt% or less because coarse precipitates will be formed by increasing the grain sizes of the precipitates when a V content is too high.

Cobalt (Co): 0.1 wt% to 0.3 wt%

Co is a solid solution strengthening element that contributes to improving the strength of the steel and may be added in an amount of 0.1 wt% or more. However, an upper limit of the Co content is determined as 0.3 wt% because any further increase in the effect of the Co addition is difficult to anticipate and there may be a burden of cost increase according to the addition of an alloying element when Co is added excessively.

Copper (Cu): 2 wt% to 5 wt%

Cu is a useful element for securing the strength of the steel and is added in an amount of 2 wt% or more in the present invention. However, since Cu may adversely affect the strength or toughness when Cu is added excessively, an upper limit of the Cu content is limited to 5 wt%.

Aluminum (Al): 0.03 wt% or less

Al is an element that generates a large amount of hard inclusions and adversely affects the characteristics of the steel when Al is added excessively. Therefore, Al may not be added if possible . However, since there may be a burden on steel making processes when the addition amount of Al is too strictly limited, it is effective that an upper limit of the Al content is limited to 0.03 wt%.

Nitrogen (N): 0.01 wt% to 0.25 wt%

N reacts with Nb or V to form a nitride or a carbonitride and is a useful element for securing high-temperature strength and high-temperature creep strength of the steel by precipitation hardening. Therefore, N may be added in an amount of 0.01 wt% or more in order to obtain the foregoing effect. However, N may be added 0.25 wt% or less because there is a concern that the steel may be weaken due to the formation of coarse nitrides, especially nitrides in a bulk form when N is added excessively.

A remaining portion in addition to the foregoing additive elements is iron (Fe) and some impurities may be unavoidably included.

Therefore, the stainless steel, for example, may include 0.01 to 0.1 wt% of C, 0.1 to 1.0 wt% of Si, 0.1 to 2.0 wt% of Mn, 16 to 20 wt% of Cr, 7 to 15 wt% of Ni, 0.1 to 1.0 wt% of Nb, 0.1 to 1.0 wt% of V, 0.1 to 0.3 wt% of Co, 2 to 5 wt% of Cu, 0.03 wt% or less of Al, 0.01 to 0.25 wt% of N, residual Fe, and unavoidable impurities.

Also, in order to improve the strength of the steel, one or more elements selected from the group consisting of W and Mo may be further added to the foregoing stainless steel composition. However, since toughness, ductility, or processability of the steel may be adversely affected when large amounts of W and Mo are added, W and Mo may have contents in ranges of 0.05 wt% to 3.0 wt% and 0.05 wt% to 3.0 wt%, respectively.

The typical unavoidable impurities included in the steel of the present invention may be phosphorus (P) and sulfur (S), and if possible, contents of P and S may be reduced because P and S degrade the properties of the steel. However, since a burden in a steel making process or the like may be caused when impurity elements are excessively limited, the contents of P and S are limited to 0.040 wt% or less.

Even in the case in which the stainless steel of the present invention is manufactured by using a typical manufacturing method of stainless steel, stainless steel having high high-temperature strength and high-temperature creep strength as well as corrosion resistance may be obtained. However, in order to more effectively obtain high-temperature strength and high-temperature creep strength of the steel, the stainless steel may be manufactured through performing a heat treatment by the following method.

Hereinafter, a method of manufacturing stainless steel is described.

That is, the method of manufacturing the stainless steel of the present invention includes heating a hot rolled and/or cold rolled steel to 1200°C or more by a typical method and cooling the heated stainless steel at a cooling rate of 10°C/s or more to 500°C or less. Each operation is described in more detail below.

Heating temperature: 1200°C or more

The stainless steel may be heated to a temperature of 1200°C or more. The heating temperature is determined to dissolve V precipitates so as to more easily precipitate on the surfaces of Nb precipitates later. In consideration of the foregoing effect, the heating temperature may be 1200°C or more. An upper limit of the heating temperature is not necessarily limited as long as the steel is not deformed or melted. However, in consideration of energy costs required for heating the steel and excessive grain growth, the heating temperature may be limited to 1300°C or less.

Cooling rate: 10°C/s or more

Even in the case in which the stainless steel is heated to the foregoing temperature or more to redissolve all the V precipitates, coarse V precipitates may be formed again when a cooling rate in a subsequent cooling operation is too slow. Therefore, the cooling rate may be 10°C/s or more in order to prevent the foregoing phenomenon. An upper limit of the cooling rate is not particularly limited in consideration of the foregoing effect, but the cooling rate, for example, may be limited to 100°C/s or less, because distortion of the steel may be generated due to excessive cooling.

Cooling stop temperature: 500°C or less

When the cooling is stopped at too high temperature, there is a concern that a large amount of V precipitates may be formed again. Therefore, it is necessary to stop the cooling at least at 500°C or less.

[Mode for Invention]

Hereinafter, the stainless steel of the present invention will be described in more detail according to the Example. However, it has to be noted that the following Example only exemplifies the present invention and does not limit the scope of the present invention. Therefore, the scope of the present invention is defined by the appended claims and the details reasonably inferred therefrom.

(Example)

Stainless steel having a composition described in the following Table 1 was melted and casted, and then hot rolled and cold rolled by using typical methods. Thereafter, specimens were manufactured by heating at a temperature of 1200°C for 30 minutes and performing a cooling treatment to 100°C at a cooling rate of 100°C/s.

[Table 1]

| | C | Si | Mn | Cr | Ni | Mo | W | Cu | Al | Co | Nb | V | N | Precipitation index |
|---|---|---|---|---|---|---|---|---|---|---|---|---|---|---|
| Comparative Steel 1 | 0.06 | 0.27 | 0.48 | 18.4 | 9.47 | 0.46 | - | 2.95 | 0.0274 | 0.212 | 0.282 | 0.1 | 0.14 | 2.96 |
| Inventive Steel 1 | 0.05 | 0.30 | 0.5 | 18.6 | 9.33 | 0.46 | - | 3 | 0.0144 | 0.202 | 0.3 | 0.305 | 0.16 | 1.68 |
| Inventive Steel 2 | 0.07 | 0.27 | 0.48 | 18.4 | 9.47 | 0.46 | - | 2.95 | 0.0274 | 0.212 | 0.282 | 0.286 | 0.19 | 2.23 |
| Inventive Steel 3 | 0.06 | 0.3 | 0.49 | 19 | 9.35 | 0.44 | - | 3 | 0.015 | 0.202 | 0.297 | 0.29 | 0.24 | 2.47 |
| Comparative Steel 2 | 0.07 | 0.3 | 0.48 | 18.3 | 9.46 | 0.48 | - | - | 0.0047 | 0.196 | 0.3 | 0.288 | 0.14 | 1.77 |
| Comparative Steel 3 | 0.05 | 0.3 | 0.5 | 18.7 | 9.35 | 0.45 | - | 2.9 | 0.0117 | 0.203 | 0.298 | 0.515 | 0.13 | 1.01 |
| Comparative Steel 4 | 0.06 | 0.28 | 0.5 | 18.7 | 9.35 | 0.44 | - | 3 | 0.01 | 0.202 | 0.306 | 0.488 | 0.19 | 1.44 |
| Inventive Steel 4 | 0.07 | 0.3 | 0.49 | 18.8 | 9.36 | 0.45 | - | 3 | 0.0151 | 0.201 | 0.309 | 0.518 | 0.25 | 1.75 |
| Comparative Steel 5 | 0.06 | 0.3 | 0.5 | 18.2 | 9.5 | 0.48 | - | - | 0.0065 | 0.201 | 0.306 | 0.518 | 0.16 | 1.22 |
| Comparative Steel 6 | 0.08 | 0.32 | 0.49 | 19 | 9.4 | - | 0.5 | 3 | 0.0781 | 0.214 | 0.302 | 0.507 | 0.24 | 1.80 |
| Comparative Steel 7 | 0.08 | 0.26 | 0.8 | 19 | 8.5 | 0.4 | 0.08 | 2.9 | - | 0.136 | 0.5 | 0.07 | 0.12 | 2.22 |
| Comparative steel 8 | 0.047 | 0.44 | 1.44 | 17.4 | 9.12 | 0.19 | 0.02 | 0.479 | 0.0058 | 0.14 | 0.05 | 0.05 | 0.017 | 3.35 |

As shown in Table 1, Comparative Steel 2 represents a case in which a Cu content is insufficient in the present invention, Comparative Steel 6 represents a case in which an Al content is excessive, and Comparative Steels 7 and 8 represent a case in which V contents are insufficient. Also, component systems of Comparative Steels 1, 3, 4, and 5 satisfied the more desirable composition of the austenitic stainless steel suggested in the present invention, but precipitation indices were out of a range of 1.5 to 2.5 which was defined in the present invention.

Also, all of Inventive Steels 1, 2, 3, and 4 not only satisfied the foregoing precipitation index range, but also satisfied the more desirable composition defined in the present invention.

High-temperature tensile tests and creep tests were performed on the foregoing steels. The conditions of the high-temperature tensile tests and creep tests, and the results thereof are presented together in Table 2. The creep tests were performed at 700°C in a non-oxidizing atmosphere under various loads from a high load of 350 MPa to 200 MPa. It has to be noted that units of strength described in Table 2 are all mega pascals (MPa).

[Table 2]

| Category | Room Temperature (RT) | 500 | 600 | 700 | 3000 hours (creep) |
|---|---|---|---|---|---|
| Comparative Steel 1 | 641.23 | 490.43 | 456.418 | 399.14 | 167.9 |
| Inventive Steel 1 | 669.7 | 522.74 | 479.29 | 421.72 | 183.6 |
| Inventive Steel 2 | 692.21 | 530.35 | 487.017 | 438.78 | 173 |
| Inventive Steel 3 | 714.14 | 536.28 | 513.152 | 463.82 | 203.58 |
| Comparative Steel 2 | 690.24 | 521.78 | 476.15 | 413.21 | 146.73 |
| Comparative Steel 3 | 656.15 | 514.91 | 476.159 | 433.77 | 166.7 |
| Comparative Steel 4 | 678.39 | 520.24 | 507 | 425.36 | 170.8 |
| Inventive Steel 4 | 683.39 | 539.4 | 516.43 | 462.84 | 172 |
| Comparative Steel 5 | 710.77 | 515.49 | 469.84 | 426.46 | 149.12 |
| Comparative Steel 6 | 682.04 | 516.57 | 503.79 | 449.24 | 166.9 |
| Comparative Steel 8 | 663 | 456.64 | 409.22 | 325.46 | 63.28 |

As shown in Table 2, there were no big differences between Inventive Steels and Comparative Steels with respect to the room temperature strength of each steel, excluding Comparative Steel 1, but considerably large differences were generated as the foregoing steels were heated to high temperatures. In particular, Comparative Steel 8, having insufficient V, exhibited considerably low high-temperature strength and high-temperature creep strength, and it is considered that a precipitation hardening effect due to Nb precipitates was no longer obtained because a redissolution phenomenon of the Nb precipitates was not prevented. Also, the component systems of Comparative Steels 1, 3, 4, and 5 having insufficient precipitation indices corresponded to a desirable range, but high high-temperature and creep strength may not be achieved because a sufficient precipitation hardening effect may not be obtained. It may be found that high-temperature physical properties of other Comparative Steels were also insufficient.

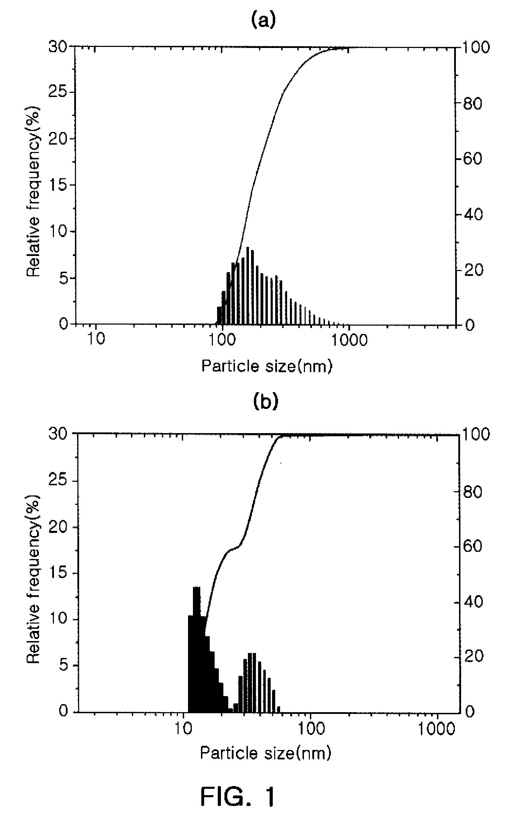

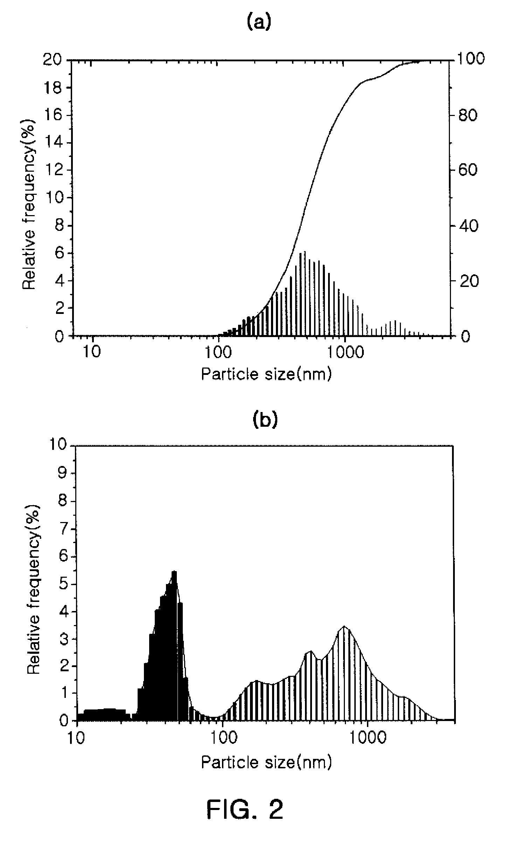

The foregoing result may also be found through particle size distributions between Comparative Steel 1 and Inventive Steel 2 shown in FIGS. 1 and 2. FIG. 1 is a graph comparing distribution frequencies for the sizes of precipitates after the foregoing heat treatments, in which (a) represents a frequency distribution for the sizes of Comparative Steel 1, and (b) represents a frequency distribution for the sizes of Inventive Steel 2. Also, FIG. 2 shows volume ratios occupied according to the size distributions of precipitate particles, in which (a) represents a volume distribution for the particle sizes of Comparative Steel 1, and (b) represents a volume distribution for the particle sizes of Inventive Steel 2.

As shown in each graph, the particle size of Comparative Steel 1 mostly exceeded 100 nm even in the case of the smallest precipitate particle. On the other hand, Inventive Steel 2, satisfying the conditions of the present invention, had a minimum particle size of about 10 nm and it may be understood that the size of a particle having maximum frequency was determined in a range of 10 nm to 20 nm as shown in FIG. 1(b). It means that a large number of very fine particles may be distributed in Inventive Steel 2 in comparison to Comparative Steel 1, having a maximum frequency particle size of 200 nm. Therefore, according to the present invention, it may be confirmed that high-temperature strength and high-temperature creep properties may be improved by the dispersion and distribution of fine precipitates in the steels.

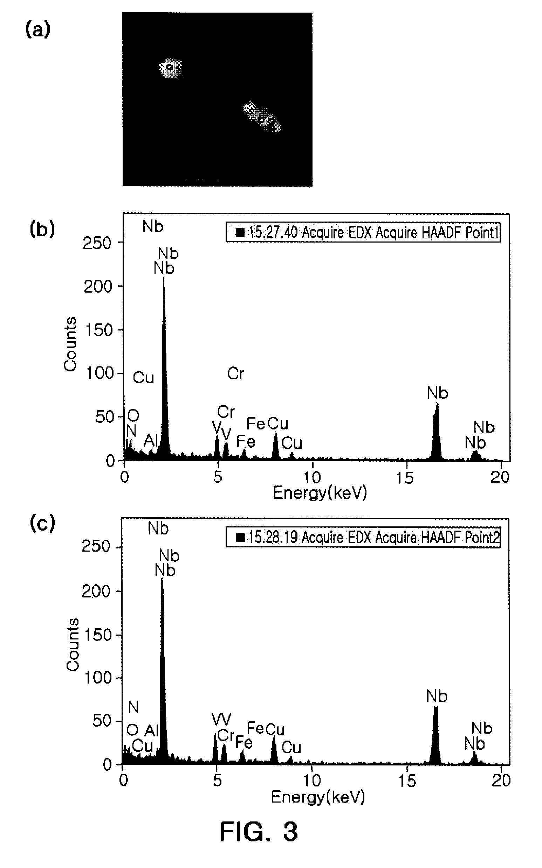

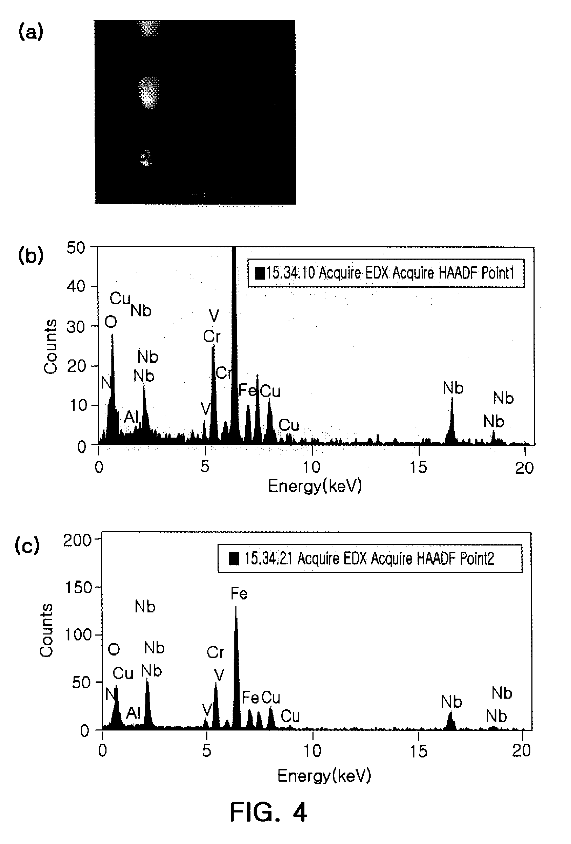

In order to confirm a phenomenon of forming V precipitates around Nb precipitates during a heat treatment, micrographs showing precipitates existing after the heat treatment (a heat treatment of the foregoing condition), micrographs showing precipitates existing after performing a creep test, and the results of energy-dispersive X-ray spectroscopy (EDX) compositional analyses in Comparative Steel 1 and Inventive Steel 2 were shown in FIGS. 3 and 4, respectively. In FIGS. 3 and 4, (a) is electron micrographs showing each region, (b) is a result of EDX on the precipitate marked in number 1 in (a), and (c) is a result of EDX on the precipitate marked in number 2 in (a). As shown in FIGS. 3 and 4, a content of the V precipitates before the heat treatment was less than 10% of Nb precipitates based on an atomic content, but the content of the V precipitates after the heat treatment was 15% or more of the atomic content of the Nb precipitates. Therefore, it may be confirmed that a large amount of the V precipitates may be formed around the Nb precipitates during the creep test.

While the present invention has been shown and described in connection with the exemplary embodiments, it will be apparent to those skilled in the art that modifications and variations can be made without departing from the spirit and scope of the invention as defined by the appended claims.

According to the present invention, since high-temperature and creep strength of stainless steel are greatly improved, effects may be obtained, in which the use amount of steel may be decreased even under the action of large stress and durability may also be improved.

While the present invention has been shown and described in connection with the exemplary embodiments, it will be apparent to those skilled in the art that modifications and variations can be made without departing from the spirit and scope of the invention as defined by the appended claims.

**Claims**

1. A stainless steel with excellent high-temperature strength having a precipitation index of about 1.5 to about 2.5 expressed by the following Equation 1:

$$[\text{Equation 1}]$$

$$(C/12+N/14)/(Nb/91+V/51): 1.5 \text{ to } 2.5$$

where carbon (C), nitrogen (N), niobium (Nb), and vanadium (V) denote contents (wt%) of corresponding components, respectively.

2. The stainless steel with excellent high-temperature strength of claim 1, wherein the stainless steel comprises about 0.1 wt% to about 1.0 wt% of Nb and about 0.1 wt% to about 1.0 wt% of V.

3. The stainless steel with excellent high-temperature strength of claim 1 or claim 2, wherein a content of V is about 10% or less than that of Nb in an atomic fraction in precipitates of the steel before being used.

4. The stainless steel with excellent high-temperature strength of claim 1 or claim 2, wherein the stainless steel has a composition including about 0.01 to 0.1 wt% of carbon (C), about 0.1 to 1.0 wt% of silicon (Si), about 0.1 to 2.0 wt% of manganese (Mn), about 16 to 20 wt% of chromium (Cr), about 7 to 15 wt% of nickel (Ni), about 0.1 to 1.0 wt% of niobium (Nb), about 0.1 to 1.0 wt% of vanadium (V), about 0.1 to 0.3 wt% of cobalt (Co), about 2 to 5 wt% of copper (Cu), about 0.03 wt% or less of aluminum (Al), about 0.01 to 0.25 wt% of nitrogen (N), residual iron (Fe), and unavoidable impurities.

5. A method of manufacturing a stainless steel with excellent high-temperature strength, the method comprising:

heating a steel satisfying the composition of claim 1 or claim 2, and subjected to hot rolling and/or cold rolling to about 1200°C or more, and
cooling the heated stainless steel at a cooling rate of about 10 °C/s or more to a temperature of about 500°C or less.

(a)

(b)

FIG. 1

**(a)**

**(b)**

## FIG. 2

FIG. 3

FIG. 4